# EUROPEAN PATENT APPLICATION

(11) **EP 4 293 765 A1**
(43) Date of publication of application: **20.12.2023**
(21) Application number: 22771629.7
(22) Date of filing: 22.02.2022
(51) Int. Cl.: H01M 8/04119

(54) **CARTRIDGE FOR FUEL CELL HUMIDIFIER, AND FUEL CELL HUMIDIFIER**

(30) Priority: 17.03.2021 KR 20210034617; 04.05.2021 KR 20210057612
(71) Applicant: Kolon Industries, Inc., Seoul 07793 (KR)
(72) Inventor: LEE, Ah Reum, Seoul 07793 (KR); OH, Young Seok, Seoul 07793 (KR); LEE, Ji Yoon, Seoul 07793 (KR)
(74) Representative: Ter Meer Steinmeister & Partner
(86) International application number: PCT/KR2022/002551
(87) International publication number: WO 2022/196963

(57) **Abstract**

The present invention relates to a cartridge for a fuel cell humidifier, and a fuel cell humidifier, the cartridge comprising: an inner case having both ends opened; a hollow fiber membrane bundle received in the inner case; an inner inlet and an inner outlet formed on the inner case so as to be spaced along a first axial direction; a first potting layer for fixing one end of the hollow fiber membrane bundle at one end of the inner case; and a second potting layer for fixing the other end of the hollow fiber membrane bundle at the other end of the inner case, wherein the packing density is 0.405 to 0.625 inclusive, the packing density being based on, with respect to a second axial direction perpendicular to the first axial direction, the potting cross-section of the inside of the one end of the inner case where the first potting layer is potted, and the membrane cross-section of the hollow fiber membrane bundle.

## Description

### [TECHNICAL FIELD]

The present disclosure relates to a humidifier for fuel cells configured to supply humidified gas to a fuel cell.

### [Background Art]

A fuel cell has advantages in that it is possible to continuously generate electricity as long as hydrogen and oxygen are supplied, unlike a general chemical cell, such as a dry cell or a storage cell, and in that there is no heat loss, whereby efficiency of the fuel cell is about twice as high as efficiency of an internal combustion engine.

In addition, the fuel cell directly converts chemical energy generated by combination of hydrogen and oxygen into electrical energy, whereby the amount of contaminants that are discharged is small. Consequently, the fuel cell has advantages in that the fuel cell is environmentally friendly and in that a concern about depletion of resources due to an increase in energy consumption can be reduced.

Based on the kind of an electrolyte that is used, such a fuel cell may generally be classified as a polymer electrolyte membrane fuel cell (PEMFC), a phosphoric acid fuel cell (PAFC), a molten carbonate fuel cell (MCFC), a solid oxide fuel cell (SOFC), or an alkaline fuel cell (AFC).

These fuel cells are operated fundamentally by the same principle, but are different from each other in terms of the kind of fuel that is used, operating temperature, catalyst, and electrolyte. Among these fuel cells, the polymer electrolyte membrane fuel cell (PEMFC) is known as being the most favorable to a transportation system as well as small-scale stationary power generation equipment, since the polymer electrolyte membrane fuel cell is operated at a lower temperature than the other fuel cells and the output density of the polymer electrolyte membrane fuel cell is high, whereby it is possible to miniaturize the polymer electrolyte membrane fuel cell.

One of the most important factors in improving the performance of the polymer electrolyte membrane fuel cell (PEMFC) is to supply a predetermined amount or more of moisture to a polymer electrolyte membrane or a proton exchange membrane (PEM) of a membrane electrode assembly (MEA) in order to retain moisture content. The reason for this is that, if the polymer electrolyte membrane or the proton exchange membrane is dried, power generation efficiency is abruptly reduced.
1) A bubbler humidification method of filling a pressure-resistant container with water and allowing a target gas to pass through a diffuser in order to supply moisture, 2) a direct injection method of calculating the amount of moisture to be supplied that is necessary for fuel cell reaction and directly supplying moisture to a gas stream pipe through a solenoid valve, and 3) a membrane humidification method of supplying moisture to a gas fluid bed using a polymer separation membrane are used as methods of humidifying the polymer electrolyte membrane or the proton exchange membrane.

Among these methods, the membrane humidification method, which provides water vapor to air that is supplied to the polymer electrolyte membrane or the proton exchange membrane using a membrane configured to selectively transmit only water vapor included in off-gas in order to humidify the polymer electrolyte membrane or the proton exchange membrane, is advantageous in that it is possible to reduce the weight and size of a humidifier.

When a module is formed, a hollow fiber membrane having large transmission area per unit volume is suitable for a permselective membrane used in the membrane humidification method. That is, when a humidifier is manufactured using a hollow fiber membrane, high integration of the hollow fiber membrane having large contact surface area is possible, whereby it is possible to sufficiently humidify the fuel cell even at a small capacity, it is possible to use a low-priced material, and it is possible to collect moisture and heat included in off-gas discharged from the fuel cell at a high temperature and to reuse the collected moisture and heat through the humidifier.

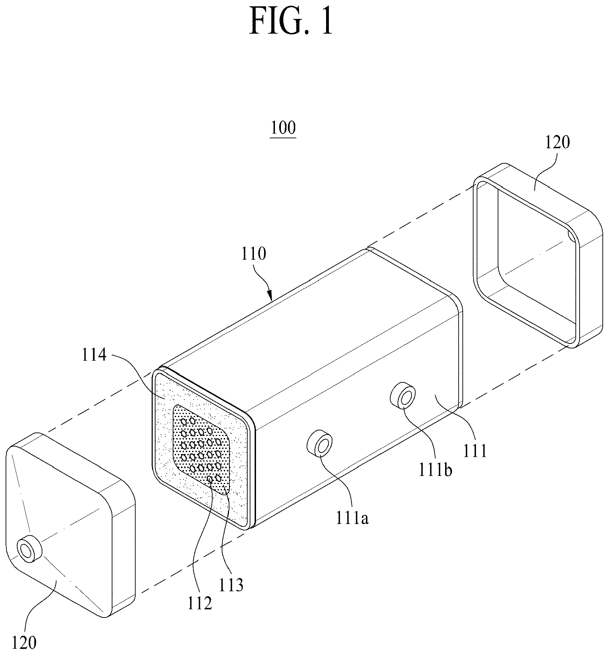

FIG. 1 is a schematic exploded perspective view of a conventional humidifier for fuel cells.

As illustrated in FIG. 1, a conventional membrane humidification type humidifier 100 includes a humidifying module 110, in which moisture exchange is performed between air supplied from the outside and off-gas discharged from a fuel cell stack (not shown), and caps 120 coupled respectively to opposite ends of the humidifying module 110.

One of the caps 120 transmits air supplied from the outside to the humidifying module 110, and the other cap transmits air humidified by the humidifying module 110 to the fuel cell stack.

The humidifying module 110 includes a mid-case 111 having an off-gas inlet 111a and an off-gas outlet 111b and a plurality of hollow fiber membranes 112 in the mid-case 111. Opposite ends of a bundle of hollow fiber membranes 112 are potted in fixing layers 113. In general, each of the fixing layers 113 is formed by hardening a liquid polymer, such as liquid polyurethane resin, using a casting method. The fixing layers 113, in which ends of the hollow fiber membranes 112 are potted, and resin layers 114 provided between the fixing layers 113 and the mid-case 111 isolate the inner spaces of the caps 120 from the inner space of the mid-case 111. Similarly to the fixing layers 113, each of the resin layers 114 is generally formed by hardening a liquid polymer, such as liquid polyurethane resin, using a casting method.

Air supplied from the outside flows along hollows of the hollow fiber membranes 112. Off-gas introduced into the mid-case 111 through the off-gas inlet 111a comes into contact with outer surfaces of the hollow fiber membranes 112, and is discharged from the mid-case 111 through the off-gas outlet 111b. When the off-gas comes into contact with the outer surfaces of the hollow fiber membranes 112, moisture contained in the off-gas is transmitted through the hollow fiber membranes 112 to humidify air flowing along the hollows of the hollow fiber membranes 112.

In recent years, fuel cells have been used in various places of use, such as a hydrogen electric vehicle, and it is required for a humidifier for fuel cells to have high humidification efficiency in order to improve performance of the fuel cells. Consequently, there is an urgent need to develop technology capable of improving humidification efficiency of the humidifier for fuel cells.

### [Disclosure]

### [Technical Problem]

The present disclosure has been made in view of the above problems, and it is an object of the present disclosure to provide a cartridge of a humidifier for fuel cells and a humidifier for fuel cells capable of having humidification efficiency required for the fuel cells.

### [Technical Solution]

In order to accomplish the above object, the present disclosure may include the following constructions.

A humidifier for fuel cells according to the present disclosure may include a humidifying module configured to humidify dry gas supplied from the outside using wet gas discharged from a fuel cell stack, a first cap coupled to one end of the humidifying module, and a second cap coupled to the other end of the humidifying module. The humidifying module may include a mid-case open at opposite ends thereof and at least one cartridge disposed in the mid-case. The cartridge may include an inner case open at opposite ends thereof, a hollow fiber membrane bundle received in the inner case, an inner inlet and an inner outlet formed at the inner case so as to be spaced apart from each other in a first axis direction, a first potting layer configured to fix one end of the hollow fiber membrane bundle at one end of the inner case, and a second potting layer configured to fix the other end of the hollow fiber membrane bundle at the other end of the inner case. Packing density based on a potting sectional area and a membrane sectional area is 0.405 to 0.625. The potting sectional area is a sectional area of an interior of the one end of the inner case in which the first potting layer is potted in a second axis direction perpendicular to the first axis direction. The membrane sectional area is a sectional area of the hollow fiber membrane bundle in the second axis direction.

A cartridge of a humidifier for fuel cells according to the present disclosure may be a cartridge of a humidifier for fuel cells configured to humidify dry gas supplied from the outside using wet gas discharged from a fuel cell stack, the cartridge including an inner case open at opposite ends thereof, a hollow fiber membrane bundle received in the inner case, an inner inlet and an inner outlet formed at the inner case so as to be spaced apart from each other in a first axis direction, a first potting layer configured to fix one end of the hollow fiber membrane bundle at one end of the inner case, and a second potting layer configured to fix the other end of the hollow fiber membrane bundle at the other end of the inner case. Packing density based on a potting sectional area and a membrane sectional area is 0.405 to 0.625. The potting sectional area is a sectional area of an interior of the one end of the inner case in which the first potting layer is potted in a second axis direction perpendicular to the first axis direction. The membrane sectional area is a sectional area of the hollow fiber membrane bundle in the second axis direction.

### [Advantageous Effects]

The present disclosure is implemented such that humidification efficiency required for a fuel cell is achieved using packing density, which is the ratio of a hollow fiber membrane bundle, whereby it is possible to contribute to improvement in performance of the fuel cell.

### [Description of Drawings]

FIG. 1 is a schematic exploded perspective view of a conventional humidifier for fuel cells.
FIG. 2 is a schematic exploded perspective view of a humidifier for fuel cells according to the present disclosure.
FIG. 3 is a schematic exploded sectional view showing the humidifier for fuel cells according to the present disclosure, taken along line I-I of FIG. 2.
FIG. 4 is a schematic coupled sectional view showing the humidifier for fuel cells according to the present disclosure, taken along line I-I of FIG. 2.
FIG. 5 is a schematic plan view of a cartridge of the humidifier for fuel cells according to the present disclosure.
FIG. 6 is a schematic side sectional view showing the cartridge of the humidifier for fuel cells according to the present disclosure, taken along line II-II of FIG. 5.
FIG. 7 is a schematic enlarged side sectional view of part A of FIG. 6.
FIG. 8 is a graph showing change in membrane differential pressure, case differential pressure, and total differential pressure depending on packing density.
FIG. 9 is a graph showing change in humidification efficiency depending on packing density.
FIG. 10 is a table showing humidification efficiency, membrane differential pressure, case differential pressure, and total differential pressure of Comparative Examples and Examples depending on packing density.
FIGs. 11 and 12 are conceptual side sectional views showing a hollow fiber membrane bundle, taken along line II-II of FIG. 5.
FIG. 13 is a schematic exploded perspective view showing an embodiment in which two cartridges are coupled to a mid-case in the humidifier for fuel cells according to the present disclosure.
FIG. 14 is a schematic exploded perspective view showing an embodiment in which three cartridges are coupled to the mid-case in the humidifier for fuel cells according to the present disclosure.

### [Best Mode]

Hereinafter, an embodiment of a humidifier for fuel cells according to the present disclosure will be described in detail with reference to the accompanying drawings. A cartridge of a humidifier for fuel cells according to the present disclosure may be included in a humidifier for fuel cells according to the present disclosure, and therefore the cartridge of the humidifier for fuel cells according to the present disclosure will also be described while the humidifier for fuel cells according to the present disclosure is described.

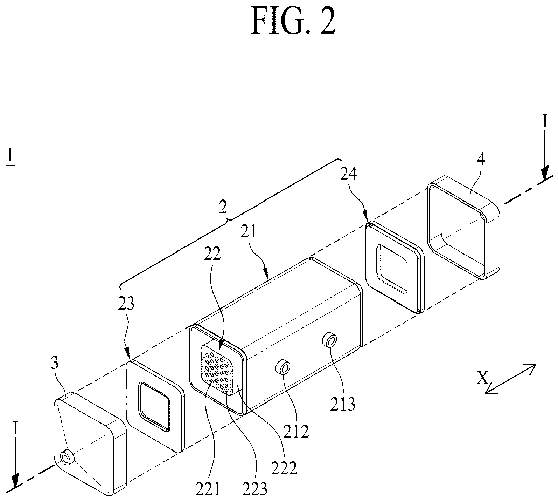

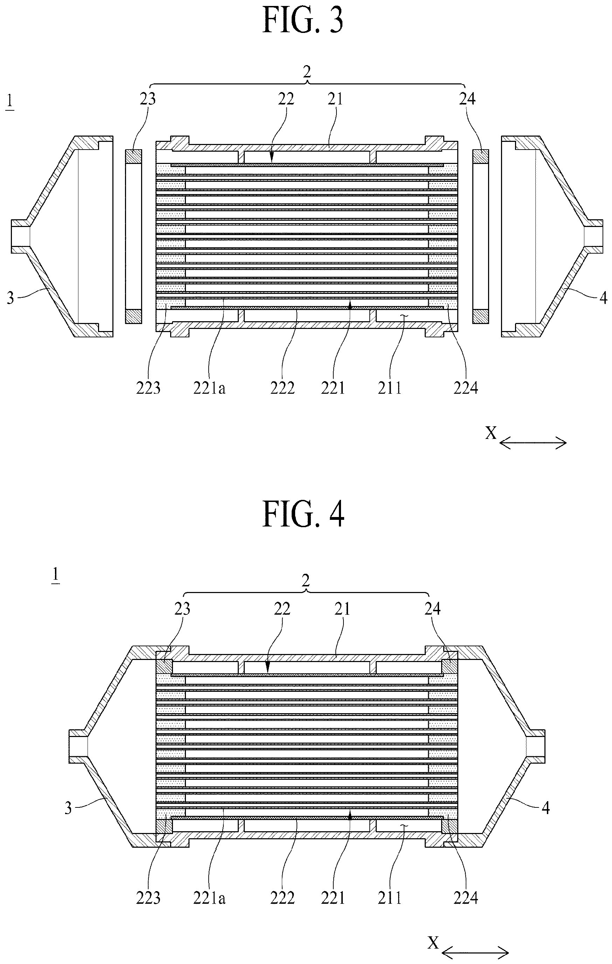

Referring to FIGs. 2 to 4, a humidifier 1 for fuel cells according to the present disclosure is configured to humidify dry gas supplied from the outside using wet gas discharged from a fuel cell stack (not shown). The dry gas may be fuel gas or air. The dry gas may be humidified by the wet gas, and may be supplied to the fuel cell stack. The humidifier 1 for fuel cells according to the present disclosure includes a humidifying module 2 configured to humidify dry gas, a first cap 3 coupled to one end of the humidifying module 2, and a second cap 4 coupled to the other end of the humidifying module 2.

Referring to FIGs. 2 to 4, the humidifying module 2 humidifies dry gas supplied from the outside. The first cap 3 may be coupled to one end of the humidifying module 2. The second cap 4 may be coupled to the other end of the humidifying module 2. The first cap 3 may transmit dry gas to the humidifying module 2. In this case, the second cap 4 may transmit dry gas humidified by wet gas in the humidifying module 2 to the fuel cell stack. The first cap 3 may transmit wet gas to the humidifying module 2. In this case, the second cap 4 may discharge wet gas to the outside after dry gas is humidified in the humidifying module 2.

The humidifying module 2 includes a mid-case 21 and at least one cartridge 22.

The cartridge 22 is coupled to the mid-case 21. The cartridge 22 may be disposed in the mid-case 21. Opposite ends of the mid-case 21 are open. In this case, a receiving hole 211 may be formed in the mid-case 21. The receiving hole 211 may be formed so as to extend through the mid-case 21 in a first axis direction (X-axis direction).

A mid inlet 212 and a mid outlet 213 may be formed at the mid-case 21. The mid inlet 212 may allow wet gas or dry gas to be introduced into the mid-case 21 therethrough. The mid outlet 213 may allow wet gas or dry gas to be discharged from the mid-case 21 therethrough. The mid inlet 212 and the mid outlet 213 may be disposed spaced apart from each other in the first axis direction (X-axis direction).

When wet gas flows through the mid inlet 212 and the mid outlet 213, the wet gas may be supplied into the cartridge 22 via the interior of the mid-case 21 through the mid inlet 212, and may come into contact with an outer surface of a hollow fiber membrane bundle 221. During this process, moisture contained in the wet gas may be transmitted through the hollow fiber membrane bundle 221 to humidify dry gas flowing along hollows of the hollow fiber membrane bundle 221. The humidified dry gas may be discharged from the hollow fiber membrane bundle 221, and may be supplied to the fuel cell stack through the second cap 4. After humidifying the dry gas, the wet gas may be discharged from the cartridge 22, may flow through the interior of the mid-case 21, and may discharged from the mid-case 21 through the mid outlet 213. The mid inlet 212 may be connected to the fuel cell stack such that wet gas is supplied thereto. In this case, the wet gas may be off-gas discharged from the fuel cell stack.

When dry gas flows through the mid inlet 212 and the mid outlet 213, the dry gas may be supplied into the cartridge 22 via the interior of the mid-case 21 through the mid inlet 212, and may come into contact with the outer surface of the hollow fiber membrane bundle 221 of the cartridge 22. During this process, moisture in wet gas flowing along the hollows of the hollow fiber membrane bundle 221 may be transmitted through the hollow fiber membrane bundle 221 to humidify the dry gas introduced into the cartridge 22. The humidified dry gas may be discharged from the cartridge 22, may flow through the interior of the mid-case 21, may be discharged from the mid-case 21 through the mid outlet 213, and may be supplied to the fuel cell stack. After humidifying the dry gas, the wet gas may be discharged from the hollow fiber membrane bundle 221, and may be discharged to the outside through the second cap 4. The first cap 3 may be connected to the fuel cell stack such that wet gas is supplied thereto. In this case, the wet gas may be off-gas discharged from the fuel cell stack.

The mid inlet 212 and the mid outlet 213 may project from the mid-case 21. The mid inlet 212 and the mid outlet 213 may project from the mid-case 21 in the same direction. The mid inlet 212 and the mid outlet 213 may also project from the mid-case 21 in different directions. The mid inlet 212, the mid outlet 213, and the mid-case 21 may be integrally formed.

The cartridge 22 is disposed in the mid-case 21. The cartridge 22 may include a hollow fiber membrane bundle 221. The hollow fiber membrane bundle 221 may include a plurality of hollow fiber membranes 221a. The hollow fiber membrane bundle 221 may be coupled to the cartridge 22 so as to be modularized. Consequently, the hollow fiber membrane bundle 221 may be installed in the mid-case 21 through a process of coupling the cartridge 22 to the mid-case 21. In the humidifier 1 for fuel cells according to the present disclosure, therefore, ease in installation, separation, and replacement of the hollow fiber membrane bundle 221 may be improved.

The cartridge 22 may include an inner case 222.

The inner case 222 is open at opposite ends thereof. In this case, openings may be formed in the opposite ends of the inner case 222. The hollow fiber membrane bundle 221 is received in the inner case 222. The hollow fiber membrane bundle 221 may be disposed in the inner case 222 so as to be modularized. The hollow fiber membrane bundle 221 may include a polymer membrane made of polysulfone resin, polyethersulfone resin, sulfonated polysulfone resin, polyvinylidene fluoride (PVDF) resin, polyacrylonitrile (PAN) resin, polyimide resin, polyamide imide resin, polyester imide resin, or a mixture of two or more thereof.

The cartridge 22 may include a first potting layer 223. The first potting layer 223 is configured to fix one end of the hollow fiber membrane bundle 221 at one end of the inner case 222. In this case, the first potting layer 223 may be formed so as not to block the hollows of the hollow fiber membrane bundle 221. The first potting layer 223 may be formed by hardening a liquid resin, such as liquid polyurethane resin, through a casting process. The first potting layer 223 may fix one end of the hollow fiber membrane bundle 221 to the inner case 222. A part of the first potting layer 223 may be located in the inner case 222, and the remaining part of the first potting layer may be located outside the inner case 222.

The cartridge 22 may include a second potting layer 224. The second potting layer 224 is configured to fix the other end of the hollow fiber membrane bundle 221 at the other end of the inner case 222. In this case, the second potting layer 224 may be formed so as not to block the hollows of the hollow fiber membrane bundle 221. Consequently, dry gas or wet gas may be supplied to the hollows of the hollow fiber membrane bundle 221 without being disturbed by the second potting layer 224 and the first potting layer 223, and may be discharged from the hollows of the hollow fiber membrane bundle 221 without being disturbed by the second potting layer 224 and the first potting layer 223. The second potting layer 224 may be formed by hardening a liquid resin, such as liquid polyurethane resin, through a casting process. The second potting layer 224 may fix the other end of the hollow fiber membrane bundle 221 to the inner case 222. A part of the second potting layer 224 may be located in the inner case 222, and the remaining part of the second potting layer may be located outside the inner case 222. The second potting layer 224 and the first potting layer 223 may be disposed spaced apart from each other in the first axis direction (X-axis direction).

The cartridge 22 may include an inner inlet 225 and an inner outlet 226.

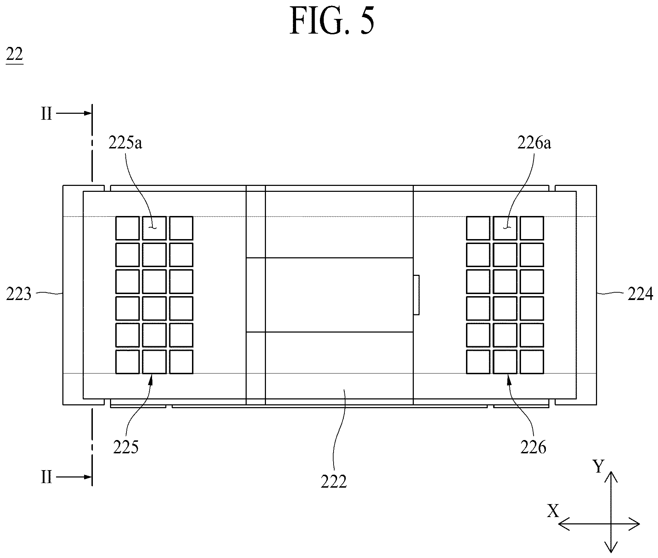

The inner inlet 225 is formed at the inner case 222. The inner inlet 225 may be formed at one side of the inner case 222. For example, one side of the inner case 222 may be an upper surface. The inner inlet 225 may allow wet gas or dry gas to be introduced into the inner case 222 therethrough. The inner inlet 225 may be formed through the inner case 222. The inner inlet 225 may be implemented by one through-hole formed through the inner case 222. As shown in FIG. 5, the inner inlet 225 may be implemented by a plurality of through-holes formed through the inner case 222. In this case, the inner inlet 225 may include a plurality of inflow windows 225a formed through different parts of the inner case 222. The inflow windows 225a may be disposed spaced apart from each other in the first axis direction (X-axis direction) and a second axis direction (Y-axis direction) so as to form a matrix. The second axis direction (Y-axis direction) is an axial direction perpendicular to the first axis direction (X-axis direction).

The inner outlet 226 is formed at the inner case 222. The inner outlet 226 may be formed at one side of the inner case 222. The inner outlet 226 may allow wet gas or dry gas to be discharged from the inner case 222 therethrough. The inner outlet 226 may be formed through the inner case 222. The inner outlet 226 may be implemented by one through-hole formed through the inner case 222. As shown in FIG. 5, the inner outlet 226 may be implemented by a plurality of through-holes formed through the inner case 222. In this case, the inner outlet 226 may include a plurality of outflow windows 226a formed through different parts of the inner case 222. The outflow windows 226a may be disposed spaced apart from each other in the first axis direction (X-axis direction) and the second axis direction (Y-axis direction) so as to form a matrix. The inner outlet 226 and the inner inlet 225 may be disposed spaced apart from each other in the first axis direction (X-axis direction).

When wet gas flows through the inner outlet 226 and the inner inlet 225, the wet gas may be supplied to a space between an inner surface of the mid-case 21 and an outer surface of the inner case 222 through the mid inlet 212, may be supplied into the inner case 222 through the inner inlet 225, and may come into contact with the outer surface of the hollow fiber membrane bundle 221. During this process, moisture contained in the wet gas may be transmitted through the hollow fiber membrane bundle 221 to humidify dry gas flowing along the hollows of the hollow fiber membrane bundle 221. The humidified dry gas may be discharged from the hollow fiber membrane bundle 221, and may be supplied to the fuel cell stack through the second cap 4. After humidifying the dry gas, the wet gas may be discharged to the space between the outer surface of the inner case 222 and the inner surface of the mid-case 21 through the inner outlet 226, and may be discharged from the mid-case 21 through the mid outlet 213.

When dry gas flows through the inner outlet 226 and the inner inlet 225, the dry gas may be supplied to the space between the inner surface of the mid-case 21 and the outer surface of the inner case 222 through the mid inlet 212, may be supplied into the inner case 222 through the inner inlet 225, and may come into contact with the outer surface of the hollow fiber membrane bundle 221. During this process, moisture in wet gas flowing along the hollows of the hollow fiber membrane bundle 221 may be transmitted through the hollow fiber membrane bundle 221 to humidify the dry gas introduced into the inner case 222. The humidified dry gas may be discharged to the space between the outer surface of the inner case 222 and the inner surface of the mid-case 21 through the inner outlet 226, may be discharged from the mid-case 21 through the mid outlet 213, and may be supplied to the fuel cell stack. After humidifying the dry gas, the wet gas may be discharged from the hollow fiber membrane bundle 221, and may be discharged to the outside through the second cap 4.

Referring to FIGs. 2 to 4, the humidifying module 2 may be implemented such that a seal is formed between the mid-case 21 and the cartridge 22 through mechanical assembly without a casting process. In this case, the humidifying module 2 may include a first packing member 23.

The first packing member 23 may be coupled to one end of the humidifying module 2. As a result, the first packing member 23 allows the first cap 3 to fluidly communicate with only the hollow fiber membrane bundle 221. In this case, the first packing member 23 may block direct mixing of dry gas and wet gas. The first packing member 23 may be airtightly coupled to one end of the humidifying module 2 through mechanical assembly. In the humidifier 1 for fuel cells according to the present disclosure, therefore, a casting process, which requires a relatively long process time, may be omitted, whereby process time for production may be shortened, and therefore it is possible to improve productivity. The first packing member 23 may be made of an elastically deformable material. For example, the first packing member 23 may be made of rubber. The first packing member 23 may be formed in a ring shape so as to form a seal between the cartridge 22 and the mid-case 21.

The humidifying module 2 may include a second packing member 24.

The second packing member 24 may be coupled to the other end of the humidifying module 2. As a result, the second packing member 24 allows the second cap 4 to fluidly communicate with only the hollow fiber membrane bundle 221. In this case, the second packing member 24 may block direct mixing of dry gas and wet gas. The second packing member 24 may be airtightly coupled to the other end of the humidifying module 2 through mechanical assembly. In the humidifier 1 for fuel cells according to the present disclosure, therefore, a casting process, which requires a relatively long process time, may be omitted, whereby process time for production may be shortened, and therefore it is possible to improve productivity. The second packing member 24 may be made of an elastically deformable material. For example, the second packing member 24 may be made of rubber. The second packing member 24 may be formed in a ring shape so as to form a seal between the cartridge 22 and the mid-case 21.

Referring to FIGs. 2 to 4, the first cap 3 is coupled to one end of the humidifying module 2. The first cap 3 may transmit dry gas or wet gas supplied from the outside to the humidifying module 2.

Referring to FIGs. 2 to 4, the second cap 4 is coupled to the other end of the humidifying module 2. The second cap 4 may discharge dry gas or wet gas transmitted from the humidifying module 2 to the outside. When humidified dry gas is transmitted from the humidifying module 2, the second cap 4 may transmit the humidified dry gas to the fuel cell stack.

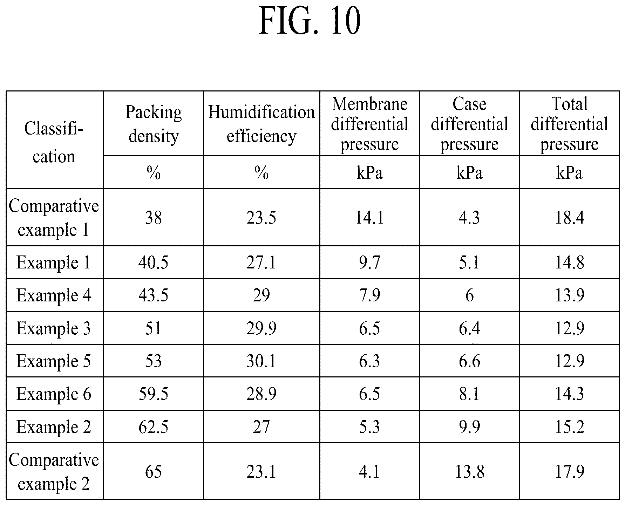

Here, the humidifier 1 for fuel cells according to the present disclosure may be implemented such that humidification efficiency is improved through packing density. In connection therewith, a detailed description will be given with reference to FIGs. 2 to 10. FIG. 10 shows Comparative Examples and Examples arranged in order of packing density from top to bottom.

The packing density is the ratio of the volume of the hollow fiber membrane bundle 221 to the inner volume of the inner case 222. As the packing density is increased, the volume of the hollow fiber membrane bundle 221 in the inner volume of the inner case 222 increases. As the packing density is decreased, the volume of the hollow fiber membrane bundle 221 in the inner volume of the inner case 222 decreases. Increase in the packing density may be achieved by at least one of increase in volume of the hollow fiber membrane bundle 221 and decrease in inner volume of the inner case 222. Decrease in the packing density may be achieved by at least one of decrease in volume of the hollow fiber membrane bundle 221 and increase in inner volume of the inner case 222. Increase and decrease in volume of the hollow fiber membrane bundle 221 may be achieved by increase and decrease in number of the hollow fiber membranes 221a constituting the hollow fiber membrane bundle 221.

In the humidifier 1 for fuel cells according to the present disclosure, the packing density may be calculated based on membrane sectional area and potting sectional area.

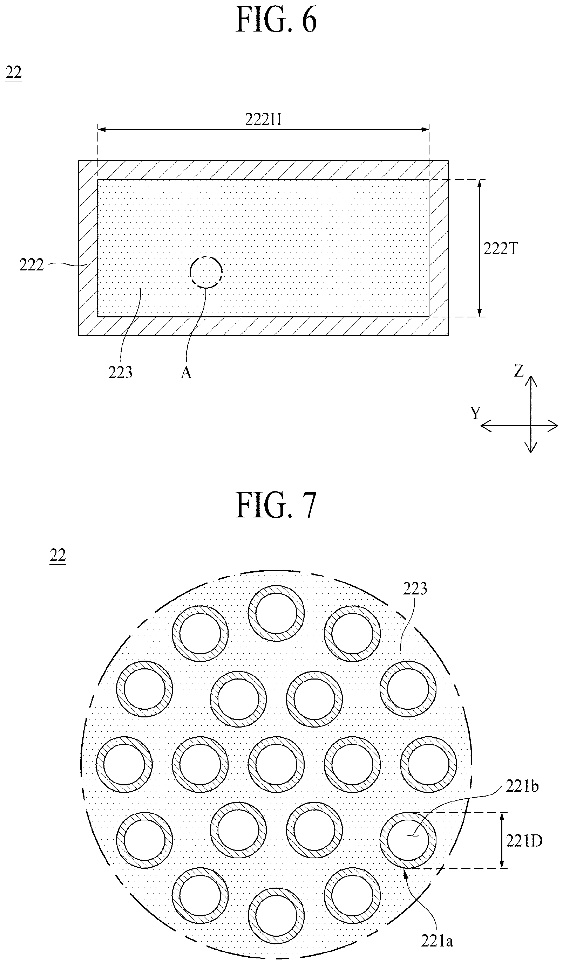

The membrane sectional area may be the sectional area of the hollow fiber membrane bundle 221 in the second axis direction (Y-axis direction). The sectional area of the hollow fiber membrane bundle 221 may be the sum of unit sectional areas of the hollow fiber membranes 221a constituting the hollow fiber membrane bundle 221 in the second axis direction (Y-axis direction). The unit sectional area may be calculated based on the external diameter 221D (see FIG. 7) of the hollow fiber membrane 221a. In this case, the unit sectional area is a value including the unit sectional area of a hollow 221b (see FIG. 7) formed in the hollow fiber membrane 221a.

The potting sectional area may be the sectional area of the interior of one end of the inner case 222 in which the first potting layer 223 is potted in the second axis direction (Y-axis direction). In this case, the sectional area of the interior of one end of the inner case 222 may be regarded as a value corresponding to the inner volume of the inner case 222, whereby the packing density may be calculated. The potting sectional area may be the sum of the sectional area of the first potting layer 223 and the membrane sectional area in the second axis direction (Y-axis direction). In this case, the potting sectional area may be a value obtained by multiplying the width 222H (see FIG. 6) of the inner case 222 by the thickness 222T (see FIG. 6) of the inner case 222. The width 222H of the inner case 222 and the thickness 222T of the inner case 222 are based on an inner surface of the inner case 222. The thickness 222T of the inner case 222 is based on a third axis direction (Z-axis direction) perpendicular to both the first axis direction (X-axis direction) and the second axis direction (Y-axis direction). Meanwhile, the potting sectional area may be the same value as the sectional area of the interior of the other end of the inner case 222 in which the second potting layer 224 is potted in the second axis direction (Y-axis direction).

As described above, the packing density may be calculated based on the potting sectional area and the membrane sectional area. The packing density may be a value obtained by dividing the membrane sectional area by the potting sectional area. In this case, the packing density may be defined as the ratio of the membrane sectional area to the potting sectional area. Humidification efficiency of the humidifier 1 for fuel cells according to the present disclosure may be changed by the packing density. This will be described in detail.

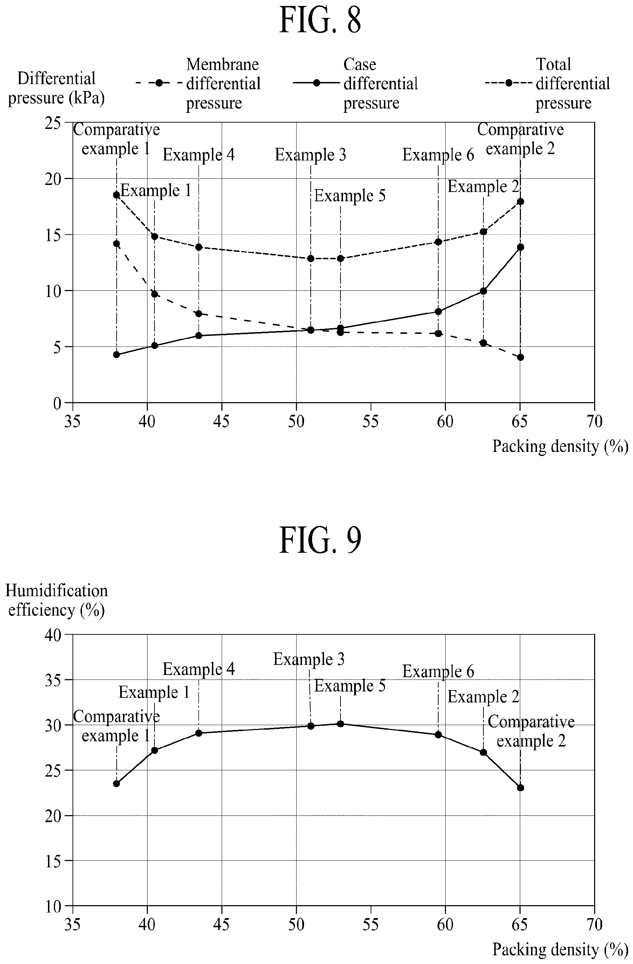

First, when the packing density is increased, the membrane sectional area may increase. Since the sum of the sectional areas of the hollows 221b of the hollow fiber membrane bundle 221 increases as the membrane sectional area increases, the passage area in which dry gas or wet gas passes through the hollow fiber membrane bundle 221 may increase. As a result, differential pressure (hereinafter referred to as "membrane differential pressure") applied when dry gas or wet gas passes through the hollow fiber membrane bundle 221 decreases. This can be confirmed by the decrease in membrane differential pressure as the packing density is increased in the graph of FIG. 8.

Next, since the membrane differential pressure decreases as the packing density is increased, humidification efficiency must continuously increase. As shown in FIG. 9, however, it can be seen that humidification efficiency does not continuously increase even though the packing density is increased. The reason for this is that, as the membrane sectional area increases, the passage area in which wet gas or dry gas passes through the inner case 222 decreases, whereby differential pressure (hereinafter referred to as "case differential pressure") applied when wet gas or dry gas passes through the inner case 222 increases, which affects humidification efficiency. This can be confirmed by the increase in case differential pressure as the packing density is increased in the graph of FIG. 8. Since the case differential pressure is more greatly changed than the membrane differential pressure as the packing density is changed, change in overall differential pressure (hereinafter referred to as "total differential pressure") applied to the cartridge 22 as the packing density is changed is more greatly affected by change in the case differential pressure. This can be confirmed by the similarity between the total differential pressure and the case differential pressure shown in the graph of FIG. 8.

Since the passage area in which dry gas or wet gas passes through the hollow fiber membrane bundle 221 increases when the number of the hollow fiber membranes 221a constituting the hollow fiber membrane bundle 221 is increased, as described above, it can be expected that humidification efficiency continuously increases as the packing density is increased. Actually, however, it can be seen that the passage area in which wet gas or dry gas passes through the inner case 222 decreases as the packing density is increased, whereby the case differential pressure increases, and therefore humidification efficiency does not continuously increase.

Based thereon, the humidifier 1 for fuel cells according to the present disclosure may be implemented such that the packing density is 0.405 to 0.625. When expressed as a percentage, as shown in FIGs. 8 and 9, the humidifier 1 for fuel cells according to the present disclosure may be implemented such that the packing density is 40.5% to 62.5%. Consequently, the humidifier 1 for fuel cells according to the present disclosure may be implemented so as to have a packing density capable of improving humidification efficiency, whereby it is possible to contribute to improvement in performance of the fuel cell. This will be described in detail with reference to FIGs. 8 to 10.

First, when the packing density is less than 0.405 (less than 40.5% in the unit of percentage), the passage area in which wet gas or dry gas passes through the inner case 222 increases, whereby the case differential pressure is low, but the passage area in which dry gas or wet gas passes through the hollow fiber membrane bundle 221 decreases, whereby the membrane differential pressure is remarkably high, and therefore the total differential pressure increases. When the packing density is less than 0.405, therefore, a low humidification efficiency of less than 27% is achieved. For example, in Comparative Example 1 having a packing density of 0.38 (38% in the unit of percentage), the case differential pressure is 4.3 kPa, which is low, but the membrane differential pressure is 14.1 kPa, which is remarkably high, whereby a high total differential pressure of 18.4 kPa is achieved. Consequently, Comparative Example 1 has a low humidification efficiency of 23.5%.

When the packing density is 0.405 or more (40.5% or more in the unit of percentage) , on the other hand, the case differential pressure is somewhat high, but the membrane differential pressure is remarkably low, whereby the total differential pressure remarkably decreases, compared to when the packing density is less than 0.405 (less than 40.5% in the unit of percentage). When the packing density is 0.405 or more, therefore, a high humidification efficiency of 27% or more is achieved. For example, in Example 1 having a packing density of 0.45 (45% in the unit of percentage), the case differential pressure is 5.1 kPa, which is somewhat high, but the membrane differential pressure is 9.7 kPa, which is remarkably low, whereby a low total differential pressure of 14.8 kPa is achieved, compared to Comparative Example 1. Consequently, Example 1 has a humidification efficiency of 27.1%, which is higher than humidification efficiency of Comparative Example 1.

Next, when the packing density is greater than 0.625 (greater than 62.5% in the unit of percentage), the passage area in which dry gas or wet gas passes through the hollow fiber membrane bundle 221 increases, whereby the membrane differential pressure is low, but the passage area in which wet gas or dry gas passes through the inner case 222 decreases, whereby the case differential pressure is remarkably high; and therefore the total differential pressure increases. When the packing density is greater than 0.625, therefore, a low humidification efficiency of less than 27% is achieved. For example, in Comparative Example 2 having a packing density of 0.65 (65% in the unit of percentage), the membrane differential pressure is 4.1 kPa, which is low, but the case differential pressure is 13.8 kPa, which is remarkably high, whereby a high total differential pressure of 17.9 kPa is achieved. Consequently, Comparative Example 2 has a low humidification efficiency of 23.1%.

When the packing density is 0.625 or less (62.5% or less in the unit of percentage), on the other hand, the membrane differential pressure is somewhat high, but the case differential pressure is remarkably low, whereby the total differential pressure remarkably decreases, compared to when the packing density is greater than 0.625 (greater than 62.5% in the unit of percentage). When the packing density is 0.625 or less, therefore, a high humidification efficiency of 27% or more is achieved. For example, in Example 2 having a packing density of 0.625 (62.5% in the unit of percentage), the membrane differential pressure is 5.3 kPa, which is somewhat high, but the case differential pressure is 9.9 kPa, which is remarkably low, whereby a low total differential pressure of 15.2 kPa is achieved, compared to Comparative Example 2. Consequently, Example 2 has a humidification efficiency of 27%, which is higher than humidification efficiency of Comparative Example 2.

Since the humidifier 1 for fuel cells according to the present disclosure is implemented such that the packing density is 0.405 to 0.625, as described above, the total differential pressure is remarkably low, whereby it is possible to achieve a humidification efficiency higher than humidification efficiency of Comparative Example having a packing density of 0.405 or less or greater than 0.625. In the humidifier 1 for fuel cells according to the present disclosure, therefore, it is possible to increase the humidification rate of gas supplied to the fuel cell stack, whereby it is possible to contribute to improvement in performance of the fuel cell.

Referring to FIGs. 2 to 10, the humidifier 1 for fuel cells according to the present disclosure may be implemented such that the packing density is 0.51 or more (51% or more in the unit of percentage). Consequently, the humidifier 1 for fuel cells according to the present disclosure may have high humidification efficiency. This will be described in detail.

In Example 3 having a packing density of 0.51 (51% in the unit of percentage), the membrane differential pressure is 6.5 kPa, and the case differential pressure is 6.4 kPa. Since the difference between the membrane differential pressure and the case differential pressure is very small, a low total differential pressure of 12.9 kPa is achieved. Consequently, Example 3 has a high humidification efficiency of 29.9%, which is very close to 30%. Humidification efficiency of Example 3 is higher than humidification efficiency, which is 27.1%, of Example 1 having a packing density of 0.405 (40.5% in the unit of percentage).

In Example 4 having a packing density of 0.435 (43.5% in the unit of percentage), on the other hand, the membrane differential pressure is 7.9 kPa, and the case differential pressure is 6 kPa. Since the difference between the membrane differential pressure and the case differential pressure is large, compared to Example 3, a total differential pressure of 13.9 kPa, which is greater than the total differential pressure of Example 3, is achieved. Consequently, Example 4 has a humidification efficiency of 29%, which is lower than humidification efficiency of Example 3. However, Example 4 has humidification efficiency higher than humidification efficiency of Comparative Example 1, and also has humidification efficiency higher than humidification efficiency of Example 1.

Referring to FIGs. 2 to 10, the humidifier 1 for fuel cells according to the present disclosure may be implemented such that the packing density is 0.53 or less (53% or less in the unit of percentage). Consequently, the humidifier 1 for fuel cells according to the present disclosure may have high humidification efficiency. This will be described in detail.

In Example 5 having a packing density of 0.53 (53% in the unit of percentage), the membrane differential pressure is 6.3 kPa, and the case differential pressure is 6.6 kPa. Since the difference between the membrane differential pressure and the case differential pressure is very small, a low total differential pressure of 12.9 kPa is achieved. Consequently, humidification efficiency of Example 5 is higher than humidification efficiency, which is 27%, of Example 2 having a packing density of 0.625 (62.5% in the unit of percentage).

In Example 6 having a packing density of 0.595 (59.5% in the unit of percentage), on the other hand, the membrane differential pressure is 6.5 kPa, and the case differential pressure is 8.1 kPa. Since the difference between the membrane differential pressure and the case differential pressure is large, compared to Example 5, a total differential pressure of 14.3 kPa, which is greater than the total differential pressure of Example 5, is achieved. Consequently, Example 6 has a humidification efficiency of 28.9%, which is lower than humidification efficiency of Example 5. However, Example 6 has humidification efficiency much higher than humidification efficiency of Comparative Example 2, and also has humidification efficiency higher than humidification efficiency of Example 2.

Referring to FIGs. 2 to 10, the humidifier 1 for fuel cells according to the present disclosure may be implemented such that the packing density is 0.51 to 0.53 (51% to 53% in the unit of percentage). Consequently, the humidifier 1 for fuel cells according to the present disclosure may have high humidification efficiency, and may have stability in the total differential pressure and humidification efficiency. This can be confirmed from the fact that the membrane differential pressure of each of Example 3 having a packing density of 0.51 (51% in the unit of percentage) and Example 5 having a packing density of 0.53 (53% in the unit of percentage) is 12.9 kPa, i.e. the membrane differential pressures of Example 3 and Example 5 are equal to each other, the fact that humidification efficiency of each of Example 3 and Example 5 is about 30%, i.e. humidification efficiencies of Example 3 and Example 5 are almost equal to each other, and the fact that the difference between the membrane differential pressure and the case differential pressure of each of Example 3 and Example 5 is 0.3 kPa or less, i.e. the differences between the membrane differential pressures and the case differential pressures of Example 3 and Example 5 are almost equal to each other, whereby dry gas and wet gas have almost identical mobilities. Consequently, the humidifier 1 for fuel cells according to the present disclosure is implemented such that the packing density is 0.51 to 0.53 (51% to 53% in the unit of percentage), whereby it is possible to guarantee quality above a desired level, and therefore it is possible to improve product reliability.

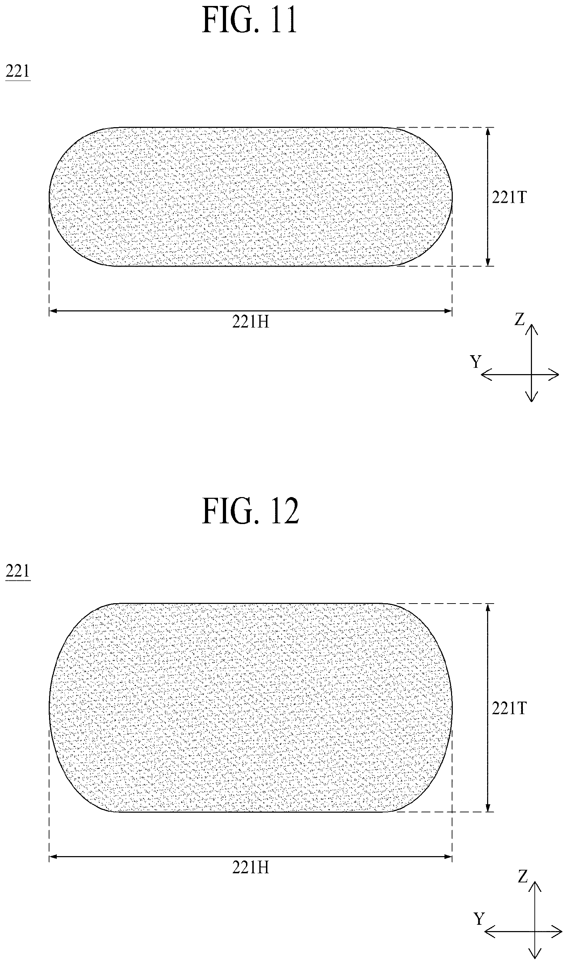

Referring to FIGs. 2 to 12, on the assumption that the width 221H of the hollow fiber membrane bundle 221 is 1, the humidifier 1 for fuel cells according to the present disclosure may be implemented such that the thickness 221T of the hollow fiber membrane bundle 221 is 0.1 to 0.8. Consequently, the humidifier 1 for fuel cells according to the present disclosure is implemented so as to have variable humidification efficiency, whereby it is possible to provide versatile fuel cells applicable to various places of use. This will be described in detail. In the following description, the thickness 221T of the hollow fiber membrane bundle 221 is defined on the premise that the width 221H of the hollow fiber membrane bundle 221 is 1.

First, the thickness 221T of the hollow fiber membrane bundle 221 is based on the third axis direction (Z-axis direction). The thickness 221T of the hollow fiber membrane bundle 221 may be equal to the thickness 222T of the inner surface of the inner case 222, or may be less than the thickness 222T of the inner surface of the inner case 222. The width 221H of the hollow fiber membrane bundle 221 is based on the second axis direction (Y-axis direction). The width 221H of the hollow fiber membrane bundle 221 may be equal to the width 222H of the inner surface of the inner case 222, or may be less than the width 222H of the inner surface of the inner case 222.

Next, when the thickness 221T of the hollow fiber membrane bundle 221 is less than 0.1, the thickness 221T of the hollow fiber membrane bundle 221 is too small, whereby it is difficult to provide a sufficient number of hollow fiber membranes 221a. When the thickness 221T of the hollow fiber membrane bundle 221 is greater than 0.8, the thickness 221T of the hollow fiber membrane bundle 221 is too large, whereby efficiency in use of hollow fiber membranes 221a disposed inside may be greatly lowered.

In contrast, the humidifier 1 for fuel cells according to the present disclosure is implemented such that the thickness 221T of the hollow fiber membrane bundle 221 is 0.1 to 0.8, whereby it is possible to provide a sufficient number of hollow fiber membranes 221a and to improve efficiency in use of hollow fiber membranes 221a disposed inside.

Meanwhile, when the humidifier 1 for fuel cells according to the present disclosure is implemented such that the thickness 221T of the hollow fiber membrane bundle 221 is greater than 0.6 to 0.8, efficiency in use of hollow fiber membranes 221a of the hollow fiber membrane bundle 221 disposed inside may be somewhat lowered; however, the lifespan of the hollow fiber membrane bundle 221 may further increase instead. In this case, the humidifier 1 for fuel cells according to the present disclosure may be implemented so as to be suitable for a place of use at which lifespan is more important than humidification efficiency.

In addition, when the humidifier 1 for fuel cells according to the present disclosure is implemented such that the thickness 221T of the hollow fiber membrane bundle 221 is 0.1 to less than 0.2, lifespan of the hollow fiber membrane bundle 221 may be somewhat shortened; however, efficiency in use of hollow fiber membranes 221a of the hollow fiber membrane bundle 221 disposed inside may be improved. In this case, the humidifier 1 for fuel cells according to the present disclosure may be implemented so as to be suitable for a place of use at which humidification efficiency is more important than lifespan.

In addition, when the humidifier 1 for fuel cells according to the present disclosure is implemented such that the thickness 221T of the hollow fiber membrane bundle 221 is 0.2 to 0.6, lifespan of the hollow fiber membrane bundle 221 and efficiency in use of hollow fiber membranes 221a of the hollow fiber membrane bundle 221 disposed inside may be well balanced. In this case, the humidifier 1 for fuel cells according to the present disclosure may be implemented so as to be suitable for a place of use at which balance between humidification efficiency and lifespan is important.

As described above, the humidifier 1 for fuel cells according to the present disclosure is implemented such that the thickness 221T of the hollow fiber membrane bundle 221 is 0.1 to 0.8, whereby the humidifier is implemented so as to have variable humidification efficiency and lifespan, and therefore it is possible to provide versatile fuel cells applicable to various places of use.

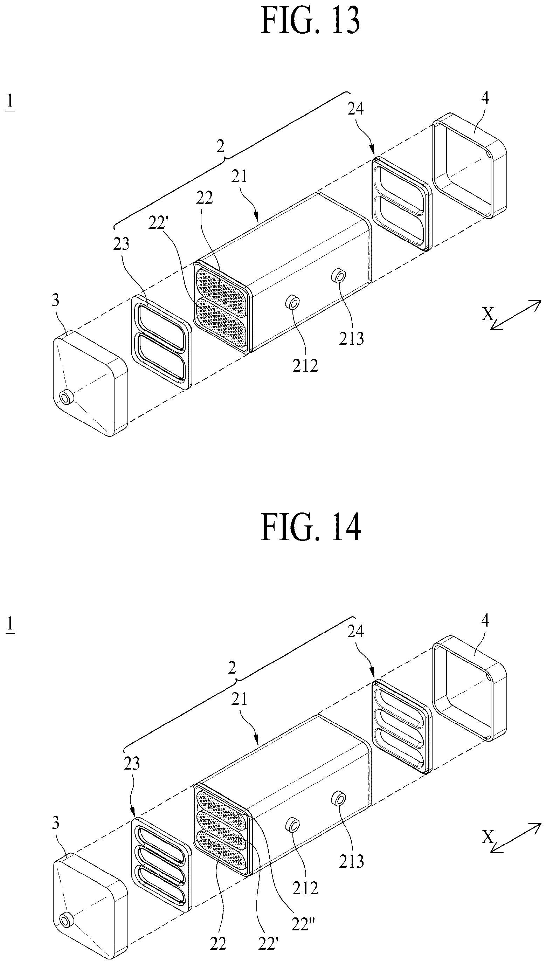

Referring to FIGs. 13 and 14, in humidifier 1 for fuel cells according to the present disclosure, two or more cartridges 22 may be disposed in the mid-case 21. As shown in FIG. 13, two cartridges 22 and 22' may be disposed in the mid-case 21. As shown in FIG. 14, three cartridges 22, 22', and 22" may be disposed in the mid-case 21. Although not shown, four or more cartridges 22 may be disposed in the mid-case 21.

The present disclosure described above is not limited to the above embodiments and the accompanying drawings, and it will be obvious to a person having ordinary skill in the art to which the present disclosure pertains that various substitutions, modifications, and alterations are possible without departing from the technical idea of the present disclosure.

## Claims

1. A humidifier for fuel cells, the humidifier comprising:
a humidifying module configured to humidify dry gas supplied from outside using wet gas discharged from a fuel cell stack;
a first cap coupled to one end of the humidifying module; and
a second cap coupled to the other end of the humidifying module, wherein
the humidifying module comprises:
a mid-case open at opposite ends thereof; and
at least one cartridge disposed in the mid-case,
the cartridge comprises:
an inner case open at opposite ends thereof;
a hollow fiber membrane bundle received in the inner case;
an inner inlet and an inner outlet formed at the inner case so as to be spaced apart from each other in a first axis direction;
a first potting layer configured to fix one end of the hollow fiber membrane bundle at one end of the inner case; and
a second potting layer configured to fix the other end of the hollow fiber membrane bundle at the other end of the inner case, and
packing density based on a potting sectional area and a membrane sectional area is 0.405 to 0.625, the potting sectional area is a sectional area of an interior of the one end of the inner case in which the first potting layer is potted in a second axis direction perpendicular to the first axis direction, the membrane sectional area is a sectional area of the hollow fiber membrane bundle in the second axis direction.

2. The humidifier according to claim 1, wherein
the membrane sectional area is a sum of unit sectional areas of hollow fiber membranes constituting the hollow fiber membrane bundle based on external diameter,
the potting sectional area is a sum of a sectional area of the first potting layer in the second axis direction and the membrane sectional area, and
the packing density is a value obtained by dividing the membrane sectional area by the potting sectional area.

3. The humidifier according to claim 1, wherein the packing density is 0.51 or more.

4. The humidifier according to claim 1 or 3, wherein the packing density is 0.53 or less.

5. The humidifier according to claim 1, wherein, on the assumption that a width of the hollow fiber membrane bundle is 1, a thickness of the hollow fiber membrane bundle is 0.1 to 0.8.

6. A cartridge of a humidifier for fuel cells configured to humidify dry gas supplied from outside using wet gas discharged from a fuel cell stack, the cartridge comprising:
an inner case open at opposite ends thereof;
a hollow fiber membrane bundle received in the inner case;
an inner inlet and an inner outlet formed at the inner case so as to be spaced apart from each other in a first axis direction;
a first potting layer configured to fix one end of the hollow fiber membrane bundle at one end of the inner case; and
a second potting layer configured to fix the other end of the hollow fiber membrane bundle at the other end of the inner case, wherein
packing density based on a potting sectional area and a membrane sectional area is 0.405 to 0.625, the potting sectional area is a sectional area of an interior of the one end of the inner case in which the first potting layer is potted in a second axis direction perpendicular to the first axis direction, the membrane sectional area is a sectional area of the hollow fiber membrane bundle in the second axis direction.

7. The cartridge according to claim 6, wherein
the membrane sectional area is a sum of sectional areas of hollow fiber membranes constituting the hollow fiber membrane bundle based on external diameter,
the potting sectional area is a sum of a sectional area of the first potting layer in the second axis direction and the membrane sectional area, and
the packing density is a value obtained by dividing the membrane sectional area by the potting sectional area.

8. The cartridge according to claim 6, wherein the packing density is 0.51 or more.

9. The cartridge according to claim 6 or 8, wherein the packing density is 0.53 or less.

10. The cartridge according to claim 6, wherein, on the assumption that a width of the hollow fiber membrane bundle is 1, a thickness of the hollow fiber membrane bundle is 0.1 to 0.8.
